# EUROPÄISCHE PATENTANMELDUNG

(11) **EP 4 825 682 A1**
(43) Veröffentlichungstag der Anmeldung: **21.10.2026**
(21) Anmeldenummer: 26168992.1
(22) Anmeldetag: 30.03.2026
(51) Int. Cl.: B60W 30/09, B62D 15/02

(54) **VERFAHREN ZUM BETREIBEN EINES ASSISTENZSYSTEMS EINES ZUMINDEST TEILWEISE ASSISTIERT BETRIEBENEN KRAFTFAHRZEUGS, COMPUTERPROGRAMMPRODUKT SOWIE ASSISTENZSYSTEM**

(30) Priorität: 16.04.2025 DE 102025114834
(71) Anmelder: Volkswagen Aktiengesellschaft, 38440 Wolfsburg (DE)
(72) Erfinder: Klingemann, Timo, 38440 Wolfsburg (DE); Milch, Stefan, 38440 Wolfsburg (DE)

(57) **Zusammenfassung**

Die Erfindung betrifft ein Verfahren zum Betreiben eines Assistenzsystems (2) eines zumindest teilweise assistiert betriebenen Kraftfahrzeugs (1), mit den Schritten: Bestimmen einer Soll-Trajektorie (14) für ein teilautomatisiertes Fahrmanöver mittels einer elektronischen Recheneinrichtung (12) des Assistenzsystems (2), wobei die Soll-Trajektorie (14) zumindest bereichsweise einen Querbeschleunigungsanteil aufweist; Erfassen einer Griffkraft (15) einer Person (7) an einer Lenkeinrichtung (6) des Kraftfahrzeugs (1) mittels einer Erfassungseinrichtung (10, 11) des Assistenzsystems (2), wobei mittels der Lenkeinrichtung (6) ein manuelles Querbeschleunigungssignal (9) für den Querbeschleunigungsanteil erzeugbar ist; Bestimmen eines assistierten Querbeschleunigungssignals (16) für die Soll-Trajektorie (14) mittels der elektronischen Recheneinrichtung (12); und Adaptieren des assistierten Querbeschleunigungssignals (16) in Abhängigkeit von der erfassten Griffkraft (15) mittels der elektronischen Recheneinrichtung (12). Ferner betrifft die Erfindung ein Computerprogrammprodukt sowie ein Assistenzsystem (2).

## Beschreibung

Die nachfolgende Erfindung betrifft ein Verfahren zum Betreiben eines Assistenzsystems eines zumindest teilweise assistiert betriebenen Kraftfahrzeugs gemäß dem geltenden Patentanspruch 1. Ferner betrifft die Erfindung ein entsprechendes Computerprogrammprodukt sowie ein entsprechendes Assistenzsystem.

Aus dem Stand der Technik sind beispielsweise so genannte automatische Ausweichsysteme, beispielsweise in Form von Sicherheitsfunktionen, bereits bekannt, beispielsweise wenn ein Fahrer des Kraftfahrzeugs unaufmerksam ist und das Assistenzsystem eine bevorstehende Kollision erkennt. Oftmals wird die Kollision durch ein entsprechendes automatisiertes Bremsen vermieden und wenn dies auch nicht möglich ist, kann in bestimmten Situationen die Kollision durch einen Querversatz des Kraftfahrzeugs zusätzlich noch verhindert werden.

Für eine sichere Umsetzung des geplanten Manövers ist es hierzu erforderlich, dass die geplante Trajektorie, welche auch als Soll-Trajektorie bezeichnet werden kann, auch umgesetzt werden kann. Hierbei kann jedoch dann der Fahrer als eine Störgröße fungieren, wenn dieser beispielsweise seine Hände auf dem Lenkrad hat.

Insbesondere automatische Ausweichsysteme sind jedoch ein wichtiger Bestandteil moderner Fahrerassistenzsysteme und tragen zur Erhöhung der Verkehrssicherheit bei. Die automatische Notbremsung (AEB - automated emergency braking) ist ein solches System, das eingreift, um einen drohenden Zusammenstoß zu vermeiden oder die Folgen abzuschwächen. Es nutzt Sensoren und Kameras, um den Abstand und die Geschwindigkeit anderer Kraftfahrzeuge oder Hindernisse zu berechnen und entsprechend zu reagieren. Wenn eine Kollision unausweichlich ist, kann ein anderes System, insbesondere die automatische Ausweichregelung, eingreifen.

Die automatische Ausweichregelung ermöglicht es dem Kraftfahrzeug selbständig auszuweichen, um eine Kollision zu vermeiden. Hierfür erfordert es ein komplexes Zusammenspiel von Sensorik, Algorithmen und Aktuatoren, um die geplante Trajektorie des Kraftfahrzeugs anzupassen und sicher ausweichen zu können.

Ein wichtiger Aspekt bei der sicheren Umsetzung eines Ausweichmanövers ist dabei der Fahrer selbst. Dieser kann, wie bereits erwähnt, als Störgröße wirken, wenn er beispielsweise versucht, manuell einzugreifen oder die Kontrolle über das Kraftfahrzeug übernimmt. Daher ist es unerlässlich, dass das System so gestaltet ist, dass der Fahrer jederzeit, insbesondere zumindest im Notmanöver, übersteuert werden kann und die Interaktion zwischen Mensch und Maschine reibungslos verläuft.

Die DE 10 2017 201 231 B1 beschreibt ein Verfahren zum Betreiben eines Ausweichassistenzsystems eines Kraftfahrzeugs, welches ein Lenksystem mit einer Servolenkunterstützung aufweist, die eine Lenkkraft bei Bedarf durch ein Zusatzlenkmoment verstärkt, wobei diese Verstärkung in Abhängigkeit von der Lenkkraft und auf Basis wenigstens einer vordefinierten Verstärkungskurve erfolgt.

Die DE 10 2016 121 474 A1 betrifft ein Verfahren zum Betreiben eines Fahrerassistenzsystems eines Kraftfahrzeugs, bei welchem das Kraftfahrzeug zumindest semi-autonom manövriert wird, eine Übergabeposition für eine Übergabe an einen Fahrer des Kraftfahrzeugs zum manuellen Führen des Kraftfahrzeugs bestimmt wird und das zumindest semi-autonome Manövrieren des Kraftfahrzeugs an der Übergabeposition beendet wird.

Die DE 10 2020 131 054 B4 betrifft eine Fahrerunterstützungsvorrichtung mit: einer Objektinformationsbezugsvorrichtung, die konfiguriert ist, um ein dreidimensionales Objekt, das sich in Front eines eigenen Fahrzeugs befindet, und eine Spur, auf der das eigene Fahrzeug fährt, zu erfassen, und um Informationen, die das dreidimensionale Objekt und die Spur angeben, als Objektinformationen zu beziehen.

Es herrscht somit Bedarf im Stand der Technik, ein Verfahren bereitzustellen, bei welchem bei einem entsprechenden Fahrmanöver, insbesondere bei einem automatisierten Notmanöver, eine potentielle Störung des Fahrers verhindert werden kann.

Aufgabe der vorliegenden Erfindung ist es, ein Verfahren, ein Computerprogrammprodukt sowie ein Assistenzsystem zu schaffen, mittels welchen ein sicherer Betrieb des Kraftfahrzeugs in einer Straßenumgebung realisiert werden kann. Insbesondere ist es Aufgabe der folgenden Erfindung ein Notmanöver zuverlässig durchführen zu können.

Diese Aufgabe wird durch ein Verfahren, ein Computerprogrammprodukt sowie ein Assistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Assistenzsystems eines zumindest teilweise assistiert betriebenen Kraftfahrzeugs. Es wird eine Soll-Trajektorie für ein teilautomatisiertes Fahrmanöver mittels einer elektronischen Recheneinrichtung des Assistenzsystems bestimmt, wobei die Soll-Trajektorie zumindest bereichsweise einen Querbeschleunigungsanteil aufweist. Es wird eine Griffkraft einer Person an einer Lenkeinrichtung des Kraftfahrzeugs mittels einer Erfassungseinrichtung des Assistenzsystems erfasst, wobei mittels der Lenkeinrichtung ein manuelles Querbeschleunigungssignal für den Querbeschleunigungsanteil erzeugbar ist. Es wird ein assistiertes Querbeschleunigungssignal für die Soll-Trajektorie mittels der elektronischen Recheneinrichtung bestimmt und es erfolgt das Adaptieren des assistierten Querbeschleunigungssignals in Abhängigkeit von der erfassten Griffkraft mittels der elektronischen Recheneinrichtung.

Insbesondere kann somit ein sicherer Betrieb des Kraftfahrzeugs, beispielsweise in einem Notmanöver, realisiert werden. Insbesondere kann somit beim zumindest teilweise automatisierten Betrieb, beispielsweise bei Level 2 gemäß SAE-Standard oder höher, die Griffkraft der Person für beispielsweise ein Ausweichmanöver entsprechend mitberücksichtigt werden. Somit kann die Person als Störgröße bestimmt werden und diese Störgröße beim Erzeugen des tatsächlichen assistierten Querbeschleunigungssignals berücksichtigt werden, so dass die Soll-Trajektorie auch im Wesentlichen tatsächlich erreicht werden kann.

Somit kann durch die Bestimmung der Soll-Trajektorie für das teilautomatisierte Fahrmanöver und die Anpassung des assistierten Querbeschleunigungssignals an die Griffkraft der Person am beispielsweise Lenkrad als Lenkeinrichtung das Assistenzsystem eine sichere und komfortable Fahrt gewährleisten. Die Berücksichtigung der Griffkraft der Person ermöglicht es, auf den Input zu reagieren und gleichzeitig das Fahrmanöver an die aktuellen Fahrbedingungen anzupassen. Dies führt auch zu einer höheren Flexibilität des Assistenzsystems. Durch das Adaptieren des assistierten Querbeschleunigungssignals an die Griffkraft der Person kann das Assistenzsystem potentielle Fehler minimieren, die durch eine fehlerhafte Interpretation der menschlichen Eingaben entstehen könnten.

Die Soll-Trajektorie weist dabei insbesondere zumindest einen Querbeschleunigungsanteil auf, insbesondere somit ein Lenkmanöver. Dieses Lenkmanöver kann über das assistierte Querbeschleunigungssignal entsprechend erzeugt werden. Somit kann das assistierte Querbeschleunigungssignal beispielsweise an eine Querbeschleunigungseinrichtung übermittelt werden, beispielsweise an die Räder, und somit eine Lenkung des Kraftfahrzeugs bewirken. Durch das manuelle Querbeschleunigungssignal kann beispielsweise an einem Lenkrad der Fahrer entsprechend ebenfalls eine Lenkung durchführen. Insbesondere um nun im Notmanöver eine entsprechende Totzeit durch die Griffkraft überwinden zu können, wird die Griffkraft bereits vorher, zumindest während der Bestimmung der Soll-Trajektorie, entsprechend bestimmt und bereits beim Erzeugen des assistierten Querbeschleunigungssignals mitberücksichtigt, so dass die Soll-Trajektorie im Wesentlichen erreicht werden kann. Somit kann beispielsweise eine Kollision mit Objekten entsprechend verhindert werden.

Insbesondere sind nämlich automatische Ausweichsysteme, wie vorliegend das Assistenzsystem, als Sicherheitsfunktion bekannt, wenn der Fahrer beispielsweise unaufmerksam ist und das Assistenzsystem eine bevorstehende Kollision erkennt. Oftmals wird die Kollision dann durch eine Bremsung oder auch durch das entsprechende Ausweichmanöver verhindert. Automatische Ausweichsysteme können als Level 2-Funktion von dem Fahrer beziehungsweise der Person jedoch jederzeit übersteuert werden. Ein erfolgreiches automatisches Ausweichmanöver setzt jedoch voraus, dass der entsprechende Systemeingriff durch den Fahrer nicht unbeabsichtigt unterbunden wird, beispielsweise dadurch, dass der Fahrer die Hände zu fest an der Lenkeinrichtung hält. Im Extremfall kann das Assistenzsystem dann keinen Querversatz aufbauen, und es findet eine Kollision statt.

Häufig hat der Fahrer eine oder beide Hände oder auch nur einzelne Finger auf dem Lenkrad aufgelegt, wie hierzu diverse Fahrten und Vorentwicklungen gezeigt haben. Die Finger können das Lenkrad leicht oder fest umschließen. Dieser Umstand hat unmittelbare Folgen auf die Umsetzbarkeit des geplanten Ausweichmanövers, also der Soll-Trajektorie, und soll daher berücksichtigt werden. Eine stärker umschließende Hand um das Lenkrad erhöht dabei die so genannte Totzeit zwischen Anforderung eines Lenkwinkels und tatsächlichem Auftreten des Lenkwinkels als eine nur leicht aufgelegte Hand, oder im anderen Extremfall im Hands-free-Betrieb. Auch der absolute Lenkwinkel, der vom Assistenzsystem aufgeprägt werden kann, wird davon beeinflusst.

Die Griffkraft, insbesondere prädiziert, verursacht eine Kraft, die dem systeminternen Lenkeingriff entgegenwirkt. Die bestimmte beziehungsweise erfasste Griffkraft wiederum erlaubt mit den folgenden Prämissen eine näherungsweise Ermittlung der so genannten Totzeit und damit eine optimierte Planung des Ausweichmanövers. Der Systemeingriff beim insbesondere automatischen Ausweichen findet nur statt, wenn eine erhöhte Kollisionsgefahr beispielsweise festgestellt wird und der Fahrer weiterhin inaktiv bleibt. Es kann also davon ausgegangen werden, dass der Fahrer der systeminitiierten Ausweichbewegung nicht sofort folgen wird, beispielsweise weil er unaufmerksam ist, so dass eine Berücksichtigung wie oben beschrieben zielführend ist.

Eine nicht korrekte Berücksichtigung der so genannten Totzeit hat als unmittelbare Konsequenz, dass der gestellte Lenkwinkel vom geplanten Lenkwinkel abweicht und das Kraftfahrzeug damit nicht auf der geplanten Trajektorie (Soll-Trajektorie) geführt werden kann. Die näherungsweise korrekte Berücksichtigung dieser Totzeit als Bestandteil des Regelparametersatzes führt folglich zu einem besseren Regelverhalten und einer geringeren Regelabweichung zwischen Soll- und Ist-Trajektorie. Da in der Regel nur wenig Ausweichraum vorhanden ist, unter anderem durch gesetzliche Rahmenbedingungen, ist das Erreichen der Soll-Trajektorie elementar. Das geplante Manöver kann besser umgesetzt werden, wodurch die Sicherheit erhöht wird.

Wie bereits erwähnt, ist das Assistenzsystem insbesondere zum Durchführen eines Ausweichmanövers ausgebildet. Alternativ oder ergänzend kann das Assistenzsystem beispielsweise auch jedoch in Form eines Spurhalteassistenten, eines Spurwechselassistenten oder auch eines Abbiegeassistenten oder dergleichen ausgebildet sein. Das Assistenzsystem ist zumindest zum Aufbauen eines zumindest teilweise automatisierten Querversatzes des Kraftfahrzeugs ausgebildet, und somit für alle Assistenzsysteme einsetzbar, bei welchen ein Querversatz in der Soll-Trajektorie bestimmt ist.

Insbesondere kann beispielsweise auch der Aufmerksamkeitsgrad des Fahrers beziehungsweise der Person an der Lenkeinrichtung entsprechend mit überwacht und berücksichtigt werden. Sollte ein Aufmerksamkeitsgrad entsprechend hoch, insbesondere höher als ein vorgegebener Schwellwert, bewertet werden, so kann der Eingriff und somit das Überlenken des manuellen Querbeschleunigungssignals eine höhe Gewichtung beim Erzeugend es Querbeschleunigungssignals erhalten. Sollte der Aufmerksamkeitsgrad entsprechend niedrig, beispielsweise unterhalb eines vorgegebene Schwellwerts, eingestuft werden, so kann beispielsweise der manuell Querbeschleunigungseingriff mit einer niedriger Gewichtung bewertet werden.

Gemäß einer vorteilhaften Ausgestaltungsform wird eine Berührfläche von Händen und/oder einer Hand der Person an der Lenkeinrichtung erfasst und in Abhängigkeit davon die Griffkraft bestimmt. Insbesondere kann nämlich aus der Berührfläche die Griffkraft, das bedeutet. das vom Fahrer aufgeprägte Drehmoment (unbeabsichtigtes Fahrerlenkmoment), abgeleitet werden.

Durch das Erfassen der Berührfläche können verschiedene Faktoren berücksichtigt werden, wie beispielsweise die Größe und Position der Hände sowie die Anzahl der Finger, die die Lenkeinrichtung berühren. Diese Information ermöglicht somit eine genaue Bestimmung der Griffkraft beziehungsweise des Fahrlenkmoments und damit ein besseres Verständnis des Fahrerinputs. Eine präzisere Erfassung der Griffkraft führt zu einer verbesserten Anpassung des assistierten Querbeschleunigungssignals, was wiederum zu einem sicheren, komfortablen und intuitiveren Fahrerlebnis beiträgt.

Weiterhin vorteilhaft ist, wenn die Berührfläche mittels einer Innenraumkamera als Erfassungseinrichtung und/oder mittels zumindest einem kapazitiven Sensor als Erfassungseinrichtung an der Lenkeinrichtung und/oder mittels zumindest einem Temperatursensor als Erfassungseinrichtung an der Lenkeinrichtung erfasst wird. Auch aus einem vorhandenen Lenkradwinkelsensor und / oder aus einem Drehmomentsensor können mit geeigneten Modellen Rückschlüsse auf das Fahrerlenkmoment gezogen werden. Alle Sensoren oder Modelle, die einen Rückschluss auf das Fahrerlenkmoment erlauben, sind grundsätzlich als vorhandene Basis für das vorliegende Verfahren verwendbar. Insbesondere handelt es sich dabei um bereits im Kraftfahrzeugbau etablierte Erfassungseinrichtungen, welche bereits standardmäßig in Kraftfahrzeugen verbaut sind. Somit müssen keine zusätzlichen Bauteile verwendet werden, da auf diese zurückgegriffen werden kann. Des Weiteren ist es möglich, somit auf Basis von unterschiedlichen Eingabeparametern die Berührfläche und somit die Griffkraft bestimmen zu können. Insbesondere die Kombination aus den verschiedenen Sensortypen ermöglicht eine präzisere und robustere Erfassung der Berührfläche, da die jeweiligen Stärken und Schwächen der einzelnen Sensoren ausgeglichen werden können. Durch die Verwendung verschiedener Sensortypen kann das Assistenzsystem auch auf unterschiedliche Fahrbedingungen und Umgebungen reagieren, indem beispielsweise bei schlechten Lichtverhältnissen die Innenraumkamera durch kapazitive oder Temperatursensoren ersetzt wird. Des Weiteren kann mit Hilfe der Innenraumkamera auch das Assistenzsystem möglicherweise unterscheiden, ob die Berührfläche vom Fahrer oder vom Beifahrer stammt. Diese Information ermöglicht eine noch gezieltere Anpassung des Assistenzsystems an den jeweiligen Nutzer.

Es hat sich weiterhin als vorteilhaft erwiesen, wenn das Assistenzsystem für zumindest einen Level 2-assistierten Fahrbetrieb bereitgestellt wird. Es ist selbstverständlich auch möglich, dass das Assistenzsystem für höhere Levels bereitgestellt wird, bei welchen jedoch die Person grundsätzlich noch die Lenkeinrichtung zumindest zeitweise berühren muss. Beispielsweise kann auch bei einem Level 2+ oder bei einem Level 3 assistierten Fahrbetrieb das Verfahren bereitgestellt werden. Somit kann auch im zumindest teilweise automatisierten Zustand eine Unterstützung für den Fahrer erfolgen. Dabei beschreibt beispielsweise gemäß dem SAE (Society of automotive engineers)-Standardlevel 0 keine Automatisierung; Level 1, dass der Fahrer in bestimmten Fahrfunktionen wie beispielsweise im adaptiven Tempomat oder Spurhalteassistent unterstützt wird; sowie Level 2 der teilweisen Automation. Hierbei kann das Assistenzsystem gleichzeitig Lenkung und Beschleunigung beziehungsweise Bremsung übernehmen, aber der Fahrer muss stets bereit sein, die Kontrolle zurück zu erlangen und das Kraftfahrzeug zu überwachen. Der Fahrer ist dafür verantwortlich, die Aufmerksamkeit auf die Umgebung zu richten und bei Bedarf einzugreifen. Level 3 ist dabei eine bedingte Automation. Das Assistenzsystem kann die Kontrolle über das Kraftfahrzeug in bestimmten Situationen übernehmen, aber der Fahrer muss nicht ständig aufmerksam sein. Der Fahrer muss jedoch in der Lage sein, innerhalb einer bestimmten Zeitspanne die Kontrolle zurück zu gewinnen, wenn das Assistenzsystem dies anfordert. Level 4 beschreibt dabei die hohe Automation. Das Assistenzsystem kann das Kraftfahrzeug in fast allen Situationen autonom fahren, und der Fahrer muss nicht mehr eingreifen können. Ein Fahrer ist zwar möglicherweise anwesend, aber für die Fahrt nicht mehr verantwortlich. Bei Level 5 handelt es sich um den vollautonomen Betrieb. Ein Assistenzsystem, das für Level 2-assistierten Fahrbetrieb bereitgestellt wird, bietet eine höhere Stufe der Automatisierung als beispielsweise Level 1. Der Fahrer wird durch die Unterstützung bei gleichzeitiger Steuerung von Beschleunigung/Bremsen und Lenkung entlastet, muss jedoch weiterhin jederzeit bereit sein, die Kontrolle zu übernehmen und das Fahrzeug zu überwachen.

Eine weitere vorteilhafte Ausgestaltungsform sieht vor, dass die Soll-Trajektorie für ein Ausweichmanöver des Kraftfahrzeugs gegenüber einem potentiellen Kollisionsobjekt bestimmt wird. Insbesondere ist das Ausweichmanöver als Notmanöver anzusehen. Der Vorteil der Bestimmung der Soll-Trajektorie für das Ausweichmanöver besteht somit in einer erhöhten Fahrsicherheit und dem Schutz von Fahrer, Insassen und anderen Verkehrsteilnehmern. Eine präzise Soll-Trajektorie ermöglicht eine schnelle Reaktion auf potentielle Kollisionen und gewährleistet somit ein verbessertes Ausweichmanöver, das die Gefahr einer Kollision minimiert. Durch die Berücksichtigung der Fahrzeugparameter, Umgebungsbedingungen, Geschwindigkeit und Position des Kollisionsobjekts sowie der verfügbaren Flucht- oder Ausweichmöglichkeiten kann das Assistenzsystem somit eine verbesserte Soll-Trajektorie berechnen. Diese Soll-Trajektorie wird dann an das Fahrzeuglenksystem weitergegeben, um ein rechtzeitiges und effizientes Ausweichen zu ermöglichen. Eine korrekt ausgeführte Soll-Trajektorie kann nicht nur Kollisionen verhindern, sondern auch die Beeinträchtigung des Fahrzeugbetriebs minimieren, indem beispielsweise Schäden an Karosserie oder Reifen reduziert werden. Insgesamt trägt somit eine gut kalibrierte und ausgeführte Soll-Trajektorie zur Erhöhung der Fahrsicherheit und des allgemeinen Wohlbefindens von Fahrer und Insassen bei.

Ferner hat es sich als vorteilhaft erwiesen, wenn als Ausweichmanöver ein Notmanöver bestimmt wird. Der Vorteil, dass als Ausweichmanöver ein Notmanöver bestimmt wird, liegt in der schnellen Reaktion auf potentielle Kollisionen und den erhöhten Maßnahmen an Sicherheit für den Fahrer, die Insassen und andere Verkehrsteilnehmer. Bei dem Notmanöver handelt es sich um eine extreme Ausweichreaktion, bei der das Kraftfahrzeug abrupt die Fahrspur wechselt oder eine plötzliche Bremsung durchführt, um eine Kollision zu vermeiden. Diese Art von Manöver erfordert eine schnelle Entscheidungsfindung und präzise Ausführung, da der Zeitrahmen für die Reaktion begrenzt ist. Durch die Bestimmung eines Notmanövers als Ausweichstrategie kann das Assistenzsystem kritische Situationen effektiver meistern und mögliche Unfälle verhindern. Das Assistenzsystem erkennt potentielle Kollisionsgefahren, bewertet die Dringlichkeit der Situation und entscheidet, ob ein Notmanöver notwendig ist. Anschließend wird eine entsprechende Reaktion, wie eine plötzliche Lenkbewegung und/oder Bremsung, eingeleitet. Das korrekt ausgeführte Notmanöver kann das Risiko von Kollisionen erheblich reduzieren und zur allgemeinen Erhöhung der Fahrsicherheit beitragen.

Weiterhin vorteilhaft ist, wenn je höher die Griffkraft bestimmt wird, desto größer wird ein Lenkwinkel und/oder Lenkwinkelgradient und/oder ein Lenkmoment zum Durchführen der Soll-Trajektorie bestimmt. Insbesondere kann somit bei erkannt großer Berührfläche beziehungsweise starker Umschließung der Lenkeinrichtung beziehungsweise des Lenkrads der Lenkwinkel und/oder Lenkwinkelgradient erhöht werden, so dass das vom Fahrer unbeabsichtigt aufgeprägte Drehmoment durch die aufgelegten Hände zum Teil kompensiert wird. Auch dadurch ergibt sich eine bessere Umsetzbarkeit der geplanten Ausweichtrajektorie. Insbesondere ist dieses Vorgehen sinnvoll, wenn das vom Fahrer unbewusst aufgeprägte Drehmoment und die daraus resultierende Dämpfung und Totzeit beitragsklein sind. Möglich ist auch, das systemindizierte Lenkmoment zu erhöhen, so dass das unbeabsichtigt entgegengesetzte Drehmoment durch die aufgelegten Hände kompensiert und die Soll-Trajektorie eingeregelt werden kann. Eine Übersteuerbarkeit durch den Fahrer ist dennoch jederzeit gegeben, da das Drehmoment nur moderat erhöht werden muss. Dieses Vorgehen ist insbesondere dann vorteilhaft, wenn die Griffkraft beziehungsweise das unbewusst aufgeprägte Drehmoment durch den Fahrer so groß ist, dass nicht nur eine geringe Dämpfung und Verzögerung des systeminitiierten Eingriffs stattfindet, sondern dieser signifikant beeinträchtigt werden würde.

Ferner hat es sich als vorteilhaft erwiesen, wenn mittels der bestimmten Griffkraft eine Totzeit zwischen einem Lenkanforderungszeitpunkt und einem Lenkreaktionszeitpunkt bestimmt wird. Insbesondere bei großer Berührfläche ist die Totzeit zwischen Lenkanforderung und Systemreaktion größer als bei kleiner Berührfläche. Denn der Systemeingriff "automatisches Ausweichen" findet dabei nur statt, wenn eine erhöhte Kollisionsgefahr festgestellt wurde und der Fahrer weiterhin inaktiv bleibt. Es kann also davon ausgegangen werden, dass der Fahrer der systeminitiierten Ausweichbewegung nicht sofort folgen wird, da er unaufmerksam ist, so dass eine Berücksichtigung wie oben beschrieben zielführend ist. Die nicht korrekte berücksichtigte Totzeit hat als unmittelbare Konsequenz, dass der gestellte Lenkwinkel vom geplanten Lenkwinkel abweicht und das Kraftfahrzeug damit nicht auf der geplanten Soll-Trajektorie geführt werden kann. Die näherungsweise korrekte Berücksichtigung der Totzeit als Bestandteil des Regelparametersatzes führt folglich zu einem besseren Regelverhalten und einer geringeren Regelabweichung zwischen Soll- und Ist-Trajektorie. Da in der Regel nur wenig Ausweichraum vorhanden ist, unter anderem durch gesetzliche Rahmenbedingungen, ist das Erreichen der Soll-Trajektorie elementar. Das geplante Fahrmanöver kann besser umgesetzt werden, wodurch die Sicherheit erhöht wird.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Insbesondere wird das Verfahren auch mittels des Computerprogrammprodukts durchgeführt.

Des Weiteren betrifft die Erfindung auch ein computerlesbares Speichermedium mit zumindest dem Computerprogrammprodukt nach dem vorhergehenden Aspekt.

Ebenfalls betrifft die Erfindung auch ein Assistenzsystem eines zumindest teilweise assistiert betriebenen Kraftfahrzeugs, mit zumindest einer Erfassungseinrichtung und mit einer elektronischen Recheneinrichtung, wobei das Assistenzsystem zum Durchführen eines Verfahrens nach dem vorhergehenden Aspekt ausgebildet ist. Insbesondere wird das Verfahren auch mittels des Assistenzsystems durchgeführt.

Weiterhin betrifft die Erfindung auch ein Kraftfahrzeug mit zumindest dem Assistenzsystem nach dem vorhergehenden Aspekt. Das Kraftfahrzeug ist als zumindest teilweise autonomes Kraftfahrzeug ausgebildet.

Vorteilhafte Ausgestaltungsformen des Verfahrens sind als vorteilhafte Ausgestaltungsformen des Computerprogrammprodukts, des computerlesbaren Speichermediums, des Assistenzsystems sowie des Kraftfahrzeugs anzusehen. Das Assistenzsystem sowie das Kraftfahrzeug weisen hierzu gegenständliche Merkmale auf, um entsprechende Verfahrensschritte durchführen zu können.

Eine elektronische Recheneinheit/Recheneinrichtung kann allgemein als ein Datenverarbeitungsgerät definiert werden, das mindestens einen Verarbeitungsschaltkreis enthält. Diese Recheneinheit ist in der Lage, Daten zu verarbeiten, um verschiedene Rechenoperationen durchzuführen. Solche Operationen können auch indizierte Zugriffe auf eine Datenstruktur, wie beispielsweise eine Umsetzungstabelle (LUT), einschließen.

Die Recheneinheit kann aus einer Kombination von Hardware- und Softwarekomponenten bestehen, darunter Computer, Mikrocontroller, integrierte Schaltkreise, Anwendungsspezifische Integrierte Schaltungen (ASIC), Feldprogrammierbare Gate-Arrays (FPGA), Einchipsysteme (SoC), Prozessoren wie Mikroprozessoren, zentrale Prozessoreinheiten (CPU), Grafikprozessoreinheiten (GPU) und Digitalsignalprozessoren (DSP). Die Recheneinheit kann auch einen physischen oder virtuellen Verbund von Computern oder anderen der genannten Einheiten umfassen.

In verschiedenen Ausführungsbeispielen verfügt die Recheneinheit über eine oder mehrere Hardware- und/oder Software-Schnittstellen sowie eine oder mehrere Speichereinheiten. Eine Speichereinheit kann als flüchtiger Datenspeicher, wie dynamischer Speicher mit wahlfreiem Zugriff (DRAM) oder statischer Speicher mit wahlfreiem Zugriff (SRAM), oder als nicht-flüchtiger Datenspeicher, wie Festwertspeicher (ROM), programmierbarer Festwertspeicher (PROM), löschbarer programmierbarer Festwertspeicher (EPROM), elektrisch löschbarer programmierbarer Festwertspeicher (EEPROM), Flash-Speicher oder Flash-EEPROM, ferroelektrischer Speicher mit wahlfreiem Zugriff (FRAM), magnetoresistiver Speicher mit wahlfreiem Zugriff (MRAM) oder Phasenänderungsspeicher mit wahlfreiem Zugriff (PCRAM), ausgeführt sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Seitenansicht einer Ausführungsform eines Kraftfahrzeugs mit einer Ausführungsform eines Assistenzsystems; und
- Fig. 2: ein schematisches Blockschaltbild gemäß einer Ausführungsform eines Assistenzsystems.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

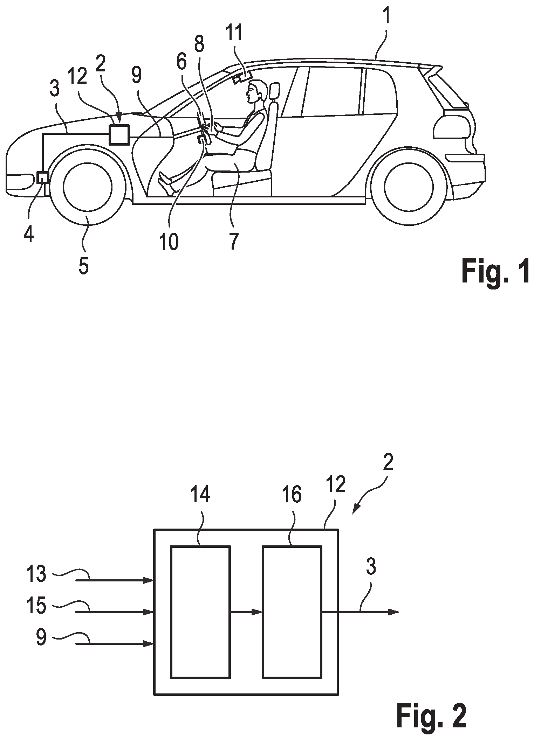

Fig. 1 zeigt eine schematische Seitenansicht einer Ausführungsform eines Kraftfahrzeugs 1. Das Kraftfahrzeug 1 ist zumindest teilweise assistiert betrieben. Insbesondere wird das Kraftfahrzeug 1 zumindest nach Level 2 gemäß SAE-Standard teilweise automatisiert betrieben. Hierzu weist das Kraftfahrzeug 1 zumindest ein Assistenzsystem 2 auf. Das Assistenzsystem 2 kann beispielsweise zum Erzeugen eines Soll-Querbeschleunigungssignals 3 für eine Querbeschleunigungseinrichtung 4 ausgebildet sein. Die Querbeschleunigungseinrichtung 4 kann beispielsweise zum Bewegen von Vorderrädern 5 ausgebildet sein.

Das Kraftfahrzeug 1 weist ferner zumindest eine Lenkeinrichtung 6 auf. Die Lenkeinrichtung 6 ist zum Erfassen einer manuellen Lenkung durch eine Person 7, beispielsweise einen Fahrer, ausgebildet. Insbesondere wenn der Fahrer Hände 8 auf dem Lenkrad 6 hat, kann ein entsprechendes manuelles Querbeschleunigungssignal 9 erfasst werden. Des Weiteren kann die Lenkeinrichtung 6 noch Lenkradsensoren 10, beispielsweise in Form von kapazitiven Sensoren oder Temperatursensoren, aufweisen. Des Weiteren zeigt die Fig. 1 noch eine Innenkamera 11. Ferner ist noch eine elektronische Recheneinrichtung 12 gezeigt.

Fig. 2 zeigt wiederum ein schematisches Blockschaltbild gemäß einer Ausführungsform des Assistenzsystems 2. Vorliegend ist insbesondere die elektronische Recheneinrichtung 12 gezeigt. Als Eingangssignal erhält hierzu die elektronische Recheneinrichtung 12 beispielsweise Umgebungsinformationen 13, auf Basis derer ein entsprechendes Ausweichmanöver beziehungsweise Fahrmanöver zu planen ist. Des Weiteren kann die elektronische Recheneinrichtung 12 als Eingangsparameter noch das manuelle Querbeschleunigungssignal 9 erhalten. Auf Basis dessen kann die elektronische Recheneinrichtung 12 insbesondere eine Soll-Trajektorie 14 für das teilautomatisierte Fahrmanöver bestimmen, wobei die Soll-Trajektorie 14 zumindest bereichsweise einen Querbeschleunigungsanteil aufweist. Es erfolgt dann das Bestimmen einer Griffkraft 15 der Person 7 an der Lenkeinrichtung 6 mittels zumindest einer der Erfassungseinrichtungen 10, 11 an der Lenkeinrichtung 6. Es wird dann ein assistiertes Querbeschleunigungssignal 16 für die Soll-Trajektorie 14 bestimmt und es erfolgt das Adaptieren des assistierten Querbeschleunigungssignals 16 in Abhängigkeit von der erfassten Griffkraft 15 mittels der elektronischen Recheneinrichtung 12, wobei dies insbesondere als das Soll-Querbeschleunigungssignal 3 im vorliegenden Ausführungsbeispiel ausgebildet sein kann.

Dabei kann insbesondere vorgesehen sein, dass eine Berührfläche von den Händen 8 der Person 7 an der Lenkeinrichtung 6 erfasst wird und in Abhängigkeit davon die Griffkraft 15 bestimmt wird. Die Berührfläche kann dabei insbesondere mittels der Innenraumkamera 11 als Erfassungseinrichtung 10, 11 und/oder mittels einem kapazitiven Sensor an der Lenkeinrichtung 6 und/oder mittels zumindest eines Temperatursensors an der Lenkeinrichtung 6 erfasst werden.

Des Weiteren kann, wie bereits erwähnt, das Assistenzsystem 2 für zumindest einen Level 2-assistierten Fahrbetrieb bereitgestellt werden. Die Soll-Trajektorie 14 wird dabei insbesondere als ein Ausweichmanöver des Kraftfahrzeugs 1 gegenüber einem potentiellen Kollisionsobjekt bestimmt. Als Ausweichmanöver kann dabei insbesondere ein Notmanöver bestimmt werden.

Weiterhin kann vorgesehen sein, je höher die Griffkraft 15 bestimmt wird, desto größer wird ein Lenkwinkel und/oder Lenkwinkelgradient und/oder ein Lenkmoment zum Durchführen der Soll-Trajektorie 14 bestimmt. Des Weiteren kann auch vorgesehen sein, dass mittels der bestimmten Griffkraft 15 eine Totzeit zwischen dem Lenkanforderungszeitpunkt und einem Lenkreaktionszeitpunkt bestimmt wird.

Da besonders automatische Ausweichmanöver als Sicherheitsfunktion nur in Erscheinung treten, wenn der Fahrer beziehungsweise die Person 7 unaufmerksam ist und das Assistenzsystem 2 beispielsweise eine bevorstehende Kollision erkennt, ist das vorgeschlagene Verfahren vorteilhaft. Oftmals wird die Kollision dabei durch ein entsprechendes Bremsmanöver vermieden, wenn dies jedoch nicht möglich ist, kann auch das Ausweichmanöver entsprechend bestimmt werden. Das automatische Ausweichsystem/Assistenzsystem 2 insbesondere im Level 2 kann jedoch von der Person 7 jederzeit übersteuert werden. Ein erfolgreiches automatisches Ausweichmanöver setzt jedoch voraus, dass der Systemeingriff durch die Person 7 nicht unbeabsichtigt unterbunden wird, beispielsweise dadurch, dass die Person 7 die Hände 8 zu fest an der Lenkeinrichtung 6 hält.

Häufig hat der Fahrer eine oder beide Hände oder auch nur einzelne Finger auf der Lenkeinrichtung 6 aufgelegt. Die Finger können das Lenkrad leicht oder fest umschließen. Dieser Umstand hat unmittelbare Folgen auf die Umsetzbarkeit des geplanten Ausweichmanövers und somit der Soll-Trajektorie 14 und muss daher berücksichtigt werden.

Eine stärker umschließende Hand um die Lenkeinrichtung 6 erhöht die Totzeit zwischen Anforderung eines Lenkwinkels und tatsächlichem Auftreten des Lenkwinkels als eine nur leicht aufgelegte Hand, oder auch im Extremfall den Hands-free-Betrieb. Auch der absolute Lenkwinkel, der vom Assistenzsystem 2 aufgeprägt werden kann, wird davon beeinflusst.

Die Griffkraft 15, näherungsweise ermittelt über die Berührfläche, verursacht eine Kraft, die dem systeminitiierten Lenkeingriff, also dem geplanten assistierten Querbeschleunigungssignal 16 entgegenwirkt. Die Berührfläche kann zum Beispiel mittels kapazitivem Lenkrad ermittelt werden. Die daraus näherungsweise ermittelte Griffkraft 15 wiederum erlaubt mit den folgenden Prämissen eine näherungsweise Ermittlung der Totzeit und damit eine optimierte Planung der Soll-Trajektorie 14.

Bei großer Berührfläche ist die Totzeit zwischen Lenkanforderung und Systemreaktion größer als bei kleiner Berührfläche. Denn der Systemeingriff "automatisches Ausweichen" findet nur statt, wenn eine erhöhte Kollisionsgefahr festgestellt wurde und der Fahrer weiterhin inaktiv bleibt. Es kann also davon ausgegangen werden, dass der Fahrer der systeminitiierten Ausweichbewegung nicht sofort folgen wird, da er unaufmerksam ist, so dass eine Berücksichtigung wie oben beschrieben zielführend ist.

Die nicht korrekte Berücksichtigung der Totzeit hat als unmittelbare Konsequenz, dass der gestellte Lenkwinkel vom geplanten Lenkwinkel abweicht und das Kraftfahrzeug 1 damit nicht auf der geplanten Soll-Trajektorie 14 geführt werden kann. Die näherungsweise korrekte Berücksichtigung der Totzeit als Bestandteil des Regelparametersatzes führt folglich zu einem besseren Regelverhalten und einer geringeren Regelabweichung zwischen Soll- und Ist-Trajektorie. Da in der Regel nur wenig Ausweichraum vorhanden ist, unter anderem durch gesetzliche Rahmenbedingungen, ist das Erreichen der Soll-Trajektorie 14 elementar. Das geplante Fahrmanöver kann besser umgesetzt werden, wodurch die Sicherheit erhöht wird.

Ferner kann bei erkannter großer Berührfläche beziehungsweise starker Umschließung des Lenkrads der Lenkwinkel und/oder Lenkwinkelgradient erhöht werden, so dass das vom Fahrer unbeabsichtigt aufgeprägte Drehmoment durch die aufgelegten Hände 8 zum Teil kompensiert wird. Auch dadurch ergibt sich eine bessere Umsetzbarkeit der geplanten Ausweichtrajektorie. Insbesondere ist dieses Vorgehen sinnvoll, wenn das vom Fahrer unbewusst aufgeprägte Drehmoment und die daraus resultierende Dämpfung und Totzeit beitragsklein sind.

Möglich ist auch, das systeminitiierte Lenkmoment zu erhöhen, so dass das unbeabsichtigt entgegengesetzte Drehmoment durch die aufgelegten Hände 8 kompensiert und die Soll-Trajektorie 14 eingeregelt werden kann. Eine Übersteuerbarkeit durch den Fahrer ist dennoch jederzeit gegeben, da das Drehmoment nur moderat erhöht werden muss. Dieses Vorgehen ist insbesondere dann vorteilhaft, wenn die Griffkraft 15 beziehungsweise unbewusst aufgeprägte Drehmoment durch den Fahrer so groß ist, dass nicht nur eine geringe Dämpfung und Verzögerung des systeminitiierten Eingriffs stattfindet, sondern dieser signifikant beeinträchtigt werden würde.

### Bezugszeichenliste

- 1: Kraftfahrzeug
- 2: Assistenzsystem
- 3: Soll-Querbeschleunigungssignal
- 4: Querbeschleunigungseinrichtung
- 5: Räder
- 6: Lenkeinrichtung
- 7: Person
- 8: Hände
- 9: manuelles Querbeschleunigungssignal
- 10: Lenkradsensor
- 11: Innenraumkamera
- 12: elektronische Recheneinrichtung
- 13: Umgebungsinformation
- 14: Soll-Trajektorie
- 15: Griffkraft
- 16: assistiertes Querbeschleunigungssignal

## Patentansprüche

1. Verfahren zum Betreiben eines Assistenzsystems (2) eines zumindest teilweise assistiert betriebenen Kraftfahrzeugs (1), mit den Schritten:
- Bestimmen einer Soll-Trajektorie (14) für ein teilautomatisiertes Fahrmanöver mittels einer elektronischen Recheneinrichtung (12) des Assistenzsystems (2), wobei die Soll-Trajektorie (14) zumindest bereichsweise einen Querbeschleunigungsanteil aufweist;
- Erfassen einer Griffkraft (15) einer Person (7) an einer Lenkeinrichtung (6) des Kraftfahrzeugs (1) mittels einer Erfassungseinrichtung (10, 11) des Assistenzsystems (2), wobei mittels der Lenkeinrichtung (6) ein manuelles Querbeschleunigungssignal (9) für den Querbeschleunigungsanteil erzeugbar ist;
- Bestimmen eines assistierten Querbeschleunigungssignals (16) für die Soll-Trajektorie (14) mittels der elektronischen Recheneinrichtung (12); und
- Adaptieren des assistierten Querbeschleunigungssignals (16) in Abhängigkeit von der erfassten Griffkraft (15) mittels der elektronischen Recheneinrichtung (12).

2. Verfahren nach Anspruch 1,
**dadurch gekennzeichnet, dass**
eine Berührfläche von Händen (8) der Person (7) an der Lenkeinrichtung (6) erfasst wird und in Abhängigkeit davon die Griffkraft (15) bestimmt wird.

3. Verfahren nach Anspruch 2,
**dadurch gekennzeichnet, dass**
die Berührfläche mittels einer Innenraumkamera (11) als Erfassungseinrichtung (10, 11) und/oder mittels zumindest einem kapazitiven Sensor als Erfassungseinrichtung (10, 11) an der Lenkeinrichtung (6) und/oder mittels zumindest einem Temperatursensor als Erfassungseinrichtung (10, 11) an der Lenkeinrichtung (6) erfasst wird.

4. Verfahren nach einem der vorhergehenden Ansprüche,
**dadurch gekennzeichnet, dass**
das Assistenzsystem (2) für zumindest einen Level-2 assistierten Fahrbetrieb bereitgestellt wird.

5. Verfahren nach einem der vorhergehenden Ansprüche,
**dadurch gekennzeichnet, dass**
die Soll-Trajektorie (14) für ein Ausweichmanöver des Kraftfahrzeugs (1) gegenüber einem potentiellen Kollisionsobjekt bestimmt wird.

6. Verfahren nach Anspruch 5,
**dadurch gekennzeichnet, dass**
als Ausweichmanöver ein Notmanöver bestimmt wird.

7. Verfahren nach einem der vorhergehenden Ansprüche,
**dadurch gekennzeichnet, dass**
je höher die Griffkraft (15) bestimmt wird desto größer wird ein Lenkwinkel und/oder Lenkwinkelgradient und/oder ein Lenkmoment zum Durchführen der Soll-Trajektorie (14) bestimmt.

8. Verfahren nach einem der vorhergehenden Ansprüche,
**dadurch gekennzeichnet, dass**
mittels der bestimmten Griffkraft (15) eine Totzeit zwischen einem Lenkanforderungszeitpunkt und einem Lenkreaktionszeitpunkt bestimmt wird.

9. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 8 durchzuführen.

10. Assistenzsystem (2) eines zumindest teilweise assistiert betriebenen Kraftfahrzeugs (1), mit zumindest einer Erfassungseinrichtung (10, 11) und mit einer elektronischen Recheneinrichtung (12), wobei das Assistenzsystem (2) zum Durchführen eines Verfahrens nach einem der Ansprüche 1 bis 8 durchzuführen.
